# EUROPEAN PATENT SPECIFICATION

(11) **EP 3 496 504 B1**
(45) Date of publication and mention of the grant of the patent: **26.05.2021**
(21) Application number: 17850085.6
(22) Date of filing: 07.07.2017
(51) Int. Cl.: H04W 76/10, H04L 29/08, H04L 29/06

(54) **DATA MIGRATION METHOD AND DEVICE**
DATENMIGRATIONSVERFAHREN UND -VORRICHTUNG
PROCÉDÉ ET DISPOSITIF DE MIGRATION DE DONNÉES

(30) Priority: 14.09.2016 CN 201610825434
(43) Date of publication of application: 12.06.2019
(73) Proprietor: GUANGDONG OPPO MOBILE TELECOMMUNICATIONS CORP., LTD., Wusha, Chang'an Dongguan, Guangdong 523860 (CN)
(72) Inventor: MA, Zhifeng, Dongguan Guangdong 523860 (CN)
(74) Representative: Manitz Finsterwald Patent- und Rechtsanwaltspartnerschaft mbB
(86) International application number: PCT/CN2017/092243
(87) International publication number: WO 2018/049882

(56) References cited:
- WO-A1-2013/126737
- CN-A- 101 690 088
- CN-A- 105 491 113
- CN-A- 105 577 361
- CN-A- 105 933 318
- CN-A- 106 487 782
- US-A1- 2003 177 422
- US-A1- 2009 214 034
- David Nield: "Share Your Home Wi-Fi Easily Using an NFC Tag or QR Code", , 22 September 2014 (2014-09-22), pages 1-4, XP055485575, Retrieved from the Internet: URL:https://fieldguide.gizmodo.com/share-y our-home-wi-fi-easily-using-an-nfc-tag-or- qr-cod-1624327128 [retrieved on 2018-06-19]

## Description

### CROSS-REFERENCE TO RELATED APPLICATION(S)

### TECHNICAL FIELD

The present relates to the technical field of mobile terminals, and more particularly to a method and an apparatus for migrating data. The features of the preamble of the independent claim are known from WO2013/126737A1. Related technologies are known from US2003/177422A1.

### BACKGROUND

As mobile terminal technologies advance rapidly, mobile phones have become an indispensable part of people's life. As people change their mobile phones faster and faster, how to transfer user data (such as daily-used applications, important chats records and documents, all Wi-Fi passwords, and the like) in an old mobile phone to a new mobile phone quickly and efficiently has become a technical problem to be solved.

### SUMMARY

A method and an apparatus for migrating data are provided according to embodiments of the present disclosure, which can improve the security in a data migration process of a mobile terminal.

In a first aspect of the present disclosure, a method for migrating data is provided according to laim 1.

In a second aspect of the present disclosure, an apparatus for migrating data is providec according to claim 7.

In a third aspect of the present disclosure, a computer readable medium is provided according to claim 13.

### BRIEF DESCRIPTION OF THE DRAWINGS

To describe technical solutions in embodiments of the present disclosure or in the related art more clearly, the following briefly introduces the accompanying drawings required for describing the embodiments or the related art. The accompanying drawings in the following description illustrate some embodiments of the present disclosure.

FIG. 1 is a diagram illustrating network architecture according to an embodiment of the present disclosure.
FIG. 2 is a flow chart illustrating a method for migrating data according to an embodiment of the present disclosure.
FIG. 3 is a flow chart illustrating a method for migrating data according to another embodiment of the present disclosure.
FIG. 4 is a flow chart illustrating a method for migrating data according to yet another embodiment of the present disclosure.
FIG. 5 is a block diagram illustrating units of an apparatus for migrating data according to an embodiment of the present disclosure.
FIG. 6 is a block diagram illustrating a mobile terminal according to an embodiment of the present disclosure.
FIG. 7 is a block diagram illustrating a mobile terminal according to another embodiment of the present disclosure.

### DETAILED DESCRIPTION

In order to enable those skilled in the art to better understand solutions of the present disclosure, technical solutions in embodiments of the present disclosure will be described clearly and completely hereinafter with reference to the accompanying drawings in the embodiments of the present disclosure.

The terms "first", "second", and the like used in the specification, the claims, and the accompany drawings of the present disclosure are used to distinguish different objects rather than describe a particular order.

According to a method for migrating data provided in embodiments of the present disclosure, a first terminal first establishes a communication connection to a second terminal, and then determines privacy data and system data in data to be migrated, where the data to be migrated includes the privacy data and the system data. Thereafter the first terminal transmits the system data and the privacy data carrying first decryption information to the second terminal, whereby the second terminal acquires second decryption information inputted by a user and analyzes the privacy data when the second terminal detects that the second decryption information matches the first decryption information. As can be seen, before migrating data, the first terminal will classify the data to be migrated. Specifically, the first terminal can migrate the system data directly and encrypt the privacy data. Accordingly, the second terminal needs to decrypt the privacy data after receiving the privacy data encrypted, then the privacy data received can be displayed or installed on the second terminal, which is beneficial to improving the security of data migration of a mobile terminal.

In order to better understand the method and an apparatus for migrating data, embodiments of the present disclosure will be described in detail below.

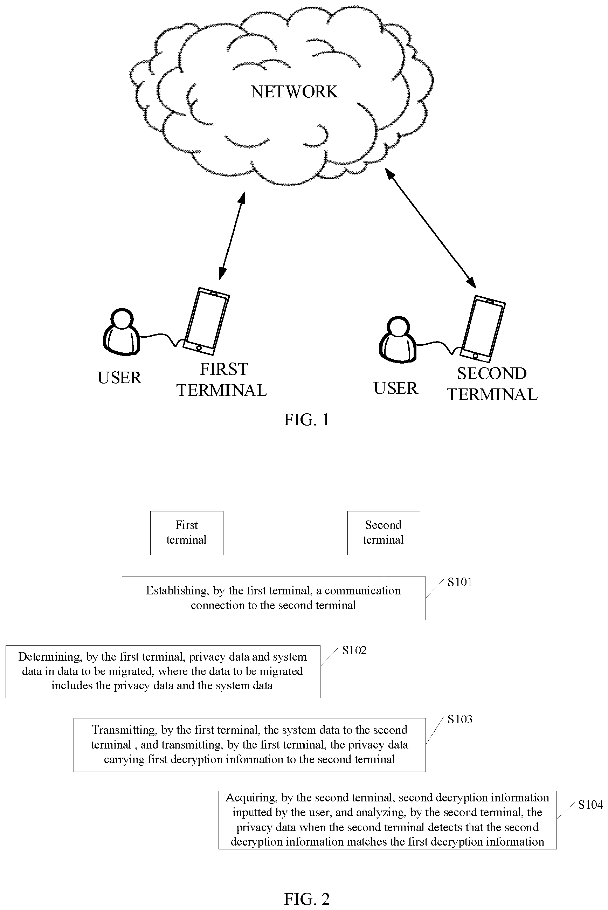

In order to better understand the method and the apparatus for migrating data, network architecture applicable to the embodiments of the present disclosure will be described in detail below. FIG. 1 is a diagram illustrating network architecture according to an embodiment of the present disclosure. As illustrated in FIG. 1, the network architecture relates to a first terminal and a second terminal. It should be noted that, the first terminal and the second terminal provided herein can be any terminal device, such as a mobile phone, a tablet computer, a personal digital assistant (PDA), a point of sale terminal (POS), an on-board computer, and the like. The first terminal may conduct communication connection with the second terminal via a network.

Based on the network architecture illustrated in FIG. 1, a method for migrating data is provided in embodiments of the present disclosure. FIG. 2 is a flow chart illustrating a method for migrating data according to an embodiment of the present disclosure. As illustrated in FIG. 2, the method begins at S101.

At S101, a first terminal establishes a communication connection to a second terminal.

In one implementation, the manner in which the first terminal establishes the communication connection to the second terminal is as follows.

The first terminal displays a two-dimensional code on a display interface of the first terminal. The two-dimensional code contains a hotspot identity of a wireless hotspot created by the first terminal and password information corresponding to the hotspot identity, and is used to be scanned by the second terminal to obtain the hotspot identity of the wireless hotspot created by the first terminal and the password information corresponding to the hotspot identity, to establish a communication connection with the first terminal based on the hotspot identity and the password information.

In one implementation, the manner in which the first terminal establishes the communication connection to the second terminal is as follows.

The first terminal establishes the communication connection to the second terminal based on a short-range wireless communication technology. The short-range wireless communication technology includes at least one of a near field communication (NFC) technology, a ZigBee technology, and a Bluetooth communication technology.

At S102, the first terminal determines privacy data and system data in data to be migrated, where the data to be migrated includes the privacy data and the system data.

At SI03, the first terminal transmits the system data to the second terminal, and transmits the privacy data carrying first decryption information to the second terminal.

In one implementation, the manner in which the first terminal transmits the privacy data carrying the first decryption information to the second terminal is as follows.

The first terminal acquires the first decryption information pre-stored, and transmits the privacy data carrying the first decryption information pre-stored to the second terminal based on the communication connection established with the second terminal.

In one implementation, the manner in which the first terminal transmits the privacy data carrying the first decryption information to the second terminal is as follows.

The first terminal displays a decryption information setting interface on a display interface of the first terminal and acquires the first decryption information inputted by a user. The first terminal transmits the privacy data carrying the first decryption information inputted by the user to the second terminal based on the communication connection established with the second terminal.

At S104, the second terminal acquires second decryption information inputted by the user, and analyzes the privacy data when detecting that the second decryption information matches the first decryption information.

According to the method for migrating data provided in the embodiments of the present disclosure, the first terminal first establishes the communication connection to the second terminal, and then determines the privacy data and the system data in the data to be migrated, where the data to be migrated includes the privacy data and the system data. Thereafter the first terminal transmits the system data and the privacy data carrying the first decryption information to the second terminal, whereby the second terminal acquires the second decryption information inputted by the user and analyzes the privacy data when the second terminal detects that the second decryption information matches the first decryption information. It can be seen that, before migrating data, the first terminal will classify the data to be migrated. The first terminal can migrate the system data directly and encrypt the privacy data. Accordingly, the second terminal needs to decrypt the privacy data after receiving the privacy data encrypted, then the privacy data can be displayed or installed on the second terminal, which can improve the security of data migration of a mobile terminal.

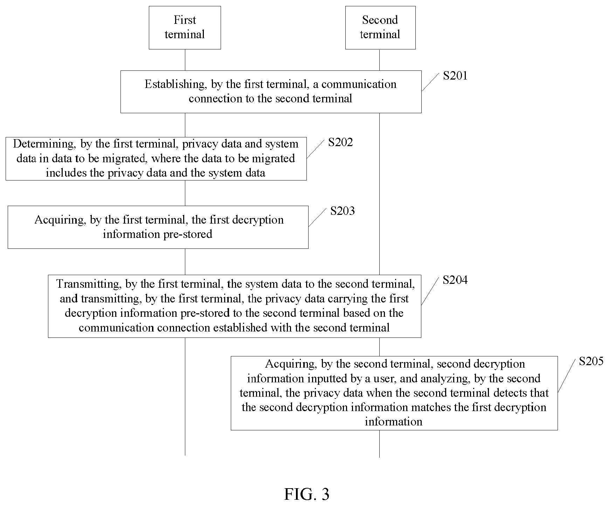

Similar to the embodiment of FIG. 2, FIG. 3 is a flow chart illustrating a method for migrating data according to another embodiment of the present disclosure. As illustrated in FIG. 3, the method begins at S201.

At S201, a first terminal establishes a communication connection to a second terminal.

In one implementation, the manner in which the first terminal establishes the communication connection to the second terminal is as follows.

The first terminal displays a two-dimensional code on a display interface of the first terminal. The two-dimensional code contains a hotspot identity of a wireless hotspot created by the first terminal and password information corresponding to the hotspot identity, and is used to be scanned by the second terminal to acquire the hotspot identity of the wireless hotspot created by the first terminal and the password information corresponding to the hotspot identity, to establish a communication connection with the first terminal based on the hotspot identity and the password information.

In one implementation, the manner in which the first terminal establishes the communication connection to the second terminal is as follows.

The first terminal establishes the communication connection to the second terminal based on a short-range wireless communication technology. The short-range wireless communication technology includes at least one of an NFC technology, a ZigBee technology, and a Bluetooth communication technology.

At S202, the first terminal determines privacy data and system data in data to be migrated, where the data to be migrated includes the privacy data and the system data.

At S203, the first terminal acquires the first decryption information pre-stored.

At S204, the first terminal transmits the system data to the second terminal, and transmits the privacy data carrying the first decryption information pre-stored to the second terminal based on the communication connection established with the second terminal.

At S205, the second terminal acquires second decryption information inputted by a user and analyzes the privacy data when detecting that the second decryption information matches the first decryption information.

According to the method for migrating data provided in the embodiments of the present disclosure, the first terminal first establishes the communication connection to the second terminal, and then determines the privacy data and the system data in the data to be migrated, where the data to be migrated includes the privacy data and the system data. Thereafter the first terminal transmits the system data and the privacy data carrying the first decryption information to the second terminal, whereby the second terminal acquires the second decryption information inputted by the user and analyzes the privacy data when the second terminal detects that the second decryption information matches the first decryption information. It can be seen that, before migrating data, the first terminal will classify the data to be migrated. Specifically, the first terminal can migrate the system data directly and encrypt the privacy data. Accordingly, the second terminal needs to decrypt the privacy data after receiving the privacy data encrypted, then the privacy data received can be displayed or installed on the second terminal, it is possible to increase the security of data migration of a mobile terminal.

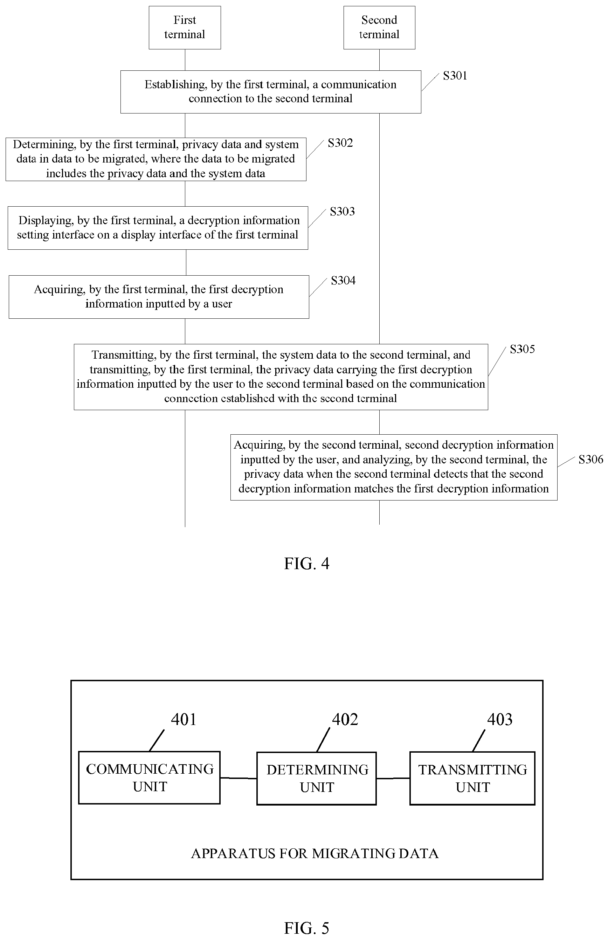

Similar to the embodiments of FIG. 2 and FIG. 3, FIG. 4 is a flow chart illustrating a method for migrating data according to yet another embodiment of the present disclosure. As illustrated in FIG. 4, the method begins at S301.

At S301, a first terminal establishes a communication connection to a second terminal.

In one implementation, the manner in which the first terminal establishes the communication connection to the second terminal is as follows.

The first terminal displays a two-dimensional code on a display interface of the first terminal. The two-dimensional code contains a hotspot identity of a wireless hotspot created by the first terminal and password information corresponding to the hotspot identity, and is used to be scanned by the second terminal to acquire the hotspot identity of the wireless hotspot created by the first terminal and the password information corresponding to the hotspot identity, to establish a communication connection with the first terminal based on the hotspot identity and the password information.

In one implementation, the manner in which the first terminal establishes the communication connection to the second terminal is as follows.

The first terminal establishes the communication connection to the second terminal based on a short-range wireless communication technology. The short-range wireless communication technology includes at least one of an NFC technology, a ZigBee technology, and a Bluetooth communication technology.

At S302, the first terminal determines privacy data and system data in data to be migrated, where the data to be migrated includes the privacy data and the system data.

At S303, the first terminal displays a decryption information setting interface on a display interface of the first terminal.

At S304, the first terminal acquires the first decryption information inputted by a user.

At S305, the first terminal transmits the system data to the second terminal, and transmits the privacy data carrying the first decryption information inputted by the user to the second terminal based on the communication connection established with the second terminal.

At S306, the second terminal acquires second decryption information inputted by the user, and analyzes the privacy data when detecting that the second decryption information matches the first decryption information.

According to the method for migrating data provided in the embodiments of the present disclosure, the first terminal first establishes the communication connection to the second terminal, and then determines the privacy data and the system data in the data to be migrated, where the data to be migrated includes the privacy data and the system data. Thereafter the first terminal transmits the system data and the privacy data carrying the first decryption information to the second terminal, whereby the second terminal acquires the second decryption information inputted by the user and analyzes the privacy data when the second terminal detects that the second decryption information matches the first decryption information. As can be seen, before migrating data, the first terminal will classify the data to be migrated. Specifically, the first terminal can migrate the system data directly and encrypt the privacy data. Accordingly, the second terminal needs to decrypt the privacy data after receiving the privacy data encrypted, then the privacy data received can be displayed or installed on the second terminal, which can improve the security of data migration of a mobile terminal.

Another embodiment of the present disclosure is illustrated as follows. As illustrated in FIG. 5, an apparatus for migrating data is provided. The apparatus includes a communicating unit 401, a determining unit 402, and a transmitting unit 403.

The communicating unit 401 is configured to establish a communication connection to a second terminal.

The determining unit 402 is configured to determine privacy data and system data in data to be migrated, where the data to be migrated includes the privacy data and the system data.

The transmitting unit 403 is configured to transmit the system data to the second terminal, and to transmit the privacy data carrying first decryption information to the second terminal, whereby the second terminal acquires second decryption information inputted by a user and analyzes the privacy data when the second terminal detects that the second decryption information matches the first decryption information.

As an implementation, the transmitting unit 403 configured to transmit the privacy data carrying the first decryption information to the second terminal is configured to acquire the first decryption information pre-stored, and to transmit the privacy data carrying the first decryption information pre-stored to the second terminal based on the communication connection established with the second terminal.

As an implementation, the transmitting unit 403 configured to transmit the privacy data carrying the first decryption information to the second terminal is configured to display a decryption information setting interface on a display interface, to acquire the first decryption information inputted by the user, and to transmit the privacy data carrying the first decryption information inputted by the user to the second terminal based on the communication connection established with the second terminal.

As an implementation, the communicating unit 401 is configured to display a two-dimensional code on a display interface. The two-dimensional code contains a hotspot identity of a wireless hotspot created by a first terminal and password information corresponding to the hotspot identity, and is used to be scanned by the second terminal to obtain the hotspot identity of the wireless hotspot created by the first terminal and the password information corresponding to the hotspot identity, to establish a communication connection with the first terminal based on the hotspot identity and the password information.

As an implementation, the communicating unit 401 is configured to establish the communication connection to the second terminal based on a short-range wireless communication technology. The short-range wireless communication technology includes at least one of an NFC technology, a ZigBee technology, and a Bluetooth communication technology.

It is to be noted that, the apparatus for migrating data described in the embodiments of the disclosure is presented in the form of functional units. The term "unit" used herein should be understood as the broadest meaning as possible, and an object for implementing functions defined by each "unit" may be, for example, an application-specific integrated circuit (ASIC), a single circuit, a processor (shared, dedicated, or chipset) and a memory for executing one or more software or firmware programs, a combinational logic circuit, and/or other suitable components that can achieve the above described functions.

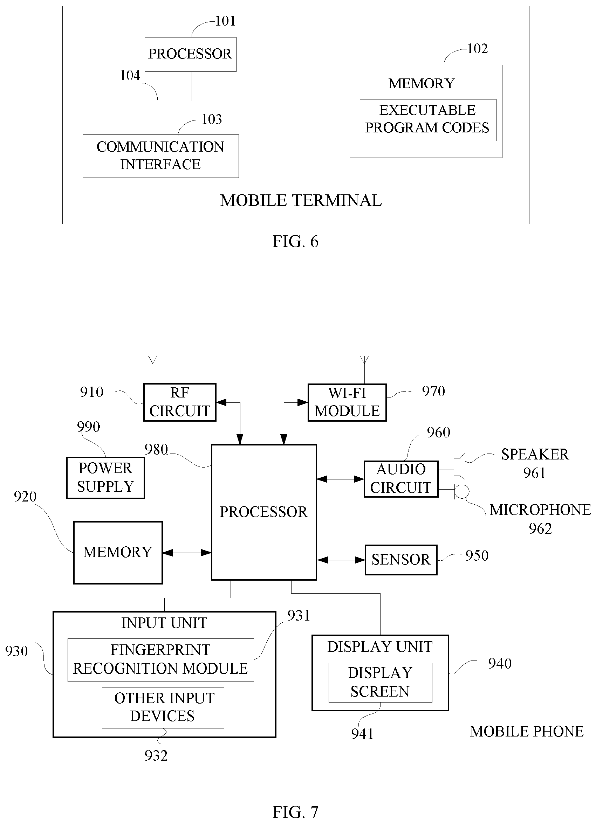

As an implementation, the function of the communication unit 401 to establish the communication connection to the second terminal can be implemented by a mobile terminal illustrated in FIG. 6. The mobile terminal may invoke executable program codes in a memory 102 through a processor 101 to establish the communication connection to the second terminal.

According to the method for migrating data provided in the embodiments of the present disclosure, the first terminal first establishes the communication connection to the second terminal, and then determines the privacy data and the system data in the data to be migrated where the data to be migrated includes the privacy data and the system data. Thereafter the first terminal transmits the system data and the privacy data carrying the first decryption information to the second terminal, whereby the second terminal acquires the second decryption information inputted by the user and analyzes the privacy data when the second terminal detects that the second decryption information matches the first decryption information. It can be seen that, before migrating data, the first terminal will classify the data to be migrated. Specifically, the first terminal can migrate the system data directly and encrypt the privacy data. Accordingly, the second terminal needs to decrypt the privacy data after receiving the privacy data encrypted, then the privacy data received can be displayed or installed on the second terminal, which can improve the security of data migration of a mobile terminal.

A mobile terminal is further provided in the embodiments of the present disclosure. As illustrated in FIG. 6, the mobile terminal includes a processor 101, a memory 102, a communication interface 103, and a communication bus 104. The processor 101, the memory 102, and the communication interface 103 are coupled through the communication bus 104 and communicate with each other. The processor 101 is configured to control a wireless communication with an external cellular network via the communication interface 103. The communication interface 103 includes, but is not limited to, an antenna, an amplifier, a transceiver, a coupler, a low noise amplifier (LNA), a duplexer, and the like. The memory 102 includes at least one of a random-access memory (RAM), a non-volatile memory, and an external memory. The memory 102 is configured to store executable program codes. The executable program codes are applicable with the processor 101 to perform the method for migrating data according to the foregoing method embodiments of the present disclosure, and the method includes the following.

The processor 101 establishes a communication connection to a second terminal.

The processor 101 determines privacy data and system data in data to be migrated, where the data to be migrated includes the privacy data and the system data.

The processor 101 transmits the system data to the second terminal, and transmits the privacy data carrying first decryption information to the second terminal, whereby the second terminal acquires second decryption information inputted by a user and whereby the second terminal analyzes the privacy data when the second terminal detects that the second decryption information matches the first decryption information.

In one implementation, the manner in which the processor 101 transmits the privacy data carrying the first decryption information to the second terminal is as follows.

The processor 101 acquires the first decryption information pre-stored. The processor 101 transmits the privacy data carrying the first decryption information pre-stored to the second terminal based on the communication connection established with the second terminal.

In one implementation, the manner in which the processor 101 transmits the privacy data carrying the first decryption information to the second terminal is as follows.

The processor 101 displays a decryption information setting interface on a display interface. The processor 101 acquires the first decryption information inputted by the user. The processor 101 transmits the privacy data carrying the first decryption information inputted by the user to the second terminal based on the communication connection established with the second terminal.

In one implementation, the manner in which the processor 101 establishes the communication connection to the second terminal is as follows.

The processor 101 controls a display interface to display a two-dimensional code. The two-dimensional code contains a hotspot identity of a wireless hotspot created by the processor 101 and password information corresponding to the hotspot identity, and is used to be scanned by the second terminal to acquire the hotspot identity of the wireless hotspot created by the processor 101 and the password information corresponding to the hotspot identity, to establish a communication connection with the processor 101 based on the hotspot identity and the password information.

In one implementation, the manner in which the processor 101 establishes the communication connection to the second terminal is as follows.

The processor 101 establishes the communication connection to the second terminal based on a short-range wireless communication technology. The short-range wireless communication technology includes at least one of an NFC technology, a ZigBee technology, and a Bluetooth communication technology.

According to the method for migrating data provided in the embodiments of the present disclosure, the first terminal first establishes the communication connection to the second terminal, and then determines the privacy data and the system data in the data to be migrated, where the data to be migrated includes the privacy data and the system data. Thereafter the first terminal transmits the system data and the privacy data carrying the first decryption information to the second terminal, whereby the second terminal acquires the second decryption information inputted by the user and analyzes the privacy data when the second terminal detects that the second decryption information matches the first decryption information. It can be seen that, before migrating data, the first terminal will classify the data to be migrated. Specifically, the first terminal can migrate the system data directly and encrypt the privacy data. Accordingly, the second terminal needs to decrypt the privacy data after receiving the privacy data encrypted, then the privacy data received can be displayed or installed on the second terminal, which can improve the security of data migration of a mobile terminal.

The executable program codes stored in the memory 102 are further configured to perform the operations related to the methods for migrating data illustrated in FIG. 2, FIG. 3, and FIG. 4. As an implementation, the executable program codes are configured to perform the operations of transmitting the system data to the second terminal, and transmitting the privacy data carrying the first decryption information to the second terminal, whereby the second terminal acquires the second decryption information inputted by the user and analyzes the privacy data when the second terminal detects that the second decryption information matches the first decryption information.

Another mobile terminal is provided according to an embodiment of the present disclosure. As illustrated in FIG. 7, only parts related to the embodiments of the present disclosure are illustrated for ease of description. For technical details not described, reference may be made to the method embodiments of the present disclosure. The terminal device may be any terminal device, such as a mobile phone, a tablet computer, a PDA, a POS, an on-board computer, and the like. The following describes a mobile phone as an example of the mobile terminal.

FIG. 7 is a block diagram of a part of a structure of a mobile phone related to a terminal device according to an embodiment of the present disclosure. As illustrated in FIG. 7, the mobile phone includes a radio frequency (RF) circuit 910, a memory 920, an input unit 930, a display unit 940, a sensor 950, an audio circuit 960, a Wi-Fi module 970, a processor 980, a power supply 990, and other components. Those skilled in the art can understand that the structure of the mobile phone illustrated in FIG. 7 does not constitute any limitation on a mobile phone. The mobile phone configured to implement technical solutions of the disclosure may include more or fewer components than illustrated or may combine certain components or different components.

In the following, various components of the mobile phone will be described in detail with reference to FIG. 7.

The RF circuit 910 is configured to transmit or receive information. Generally, the RF circuit 910 includes but is not limited to an antenna, at least one amplifier, a transceiver, a coupler, an LNA, a duplexer, and the like. In addition, the RF circuit 910 may also communicate with the network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 920 is configured to store software programs and modules, and the processor 980 is configured to execute various function applications and data processing of the mobile phone by running the software programs and the modules stored in the memory 920. The memory 920 mainly includes a program storage area and a data storage area. The program storage area may store an operating system, application programs required for at least one function and so on. The data storage area may store data created according to use of the mobile phone and so on. In addition, the memory 920 may include a high-speed RAM, and may further include a non-volatile memory such as at least one disk storage device, a flash device, or other non-volatile solid storage devices.

The input unit 930 may be configured to receive input digital or character information and to generate key signal input associated with user setting and function control of the mobile phone. As an implementation, the input unit 930 may include a fingerprint recognition module 931 and other input devices 932. The fingerprint recognition module 931 can collect fingerprint data of the user. As an implementation, the fingerprint recognition module 931 can include an optical fingerprint module, a capacitive fingerprint module, and an RF fingerprint module. The fingerprint recognition module 931 may be a capacitive fingerprint recognition module and may include a sensing electrode (an abnormal sensing electrode and a normal sensing electrode), and a signal processing circuit (such as an amplifying circuit, a noise suppression circuit, an analog digital converter (ADC) circuit, and the like) coupled with the sensing electrode. In addition to the fingerprint recognition module 931, the input unit 930 may further include other input devices 932. As an implementation, other input devices 932 may include, but are not limited to, one or more of a physical keyboard, a function key (such as a volume control key, a switch key, etc.), a trackball, a mouse, a joystick and the like.

The display unit 940 is configured to display information input by the user or information provided for the user or various menus of the mobile phone. The display unit 940 may include a display screen 941, and alternatively, the display screen 941 may be in the form of a liquid crystal display (LCD), an organic light-emitting diode (OLED) and so on. Although the fingerprint recognition module 931 and the display screen 941 are illustrated as two separate components in FIG. 7 to realize the input and output functions of the mobile phone, in some embodiments, the fingerprint recognition module 931 may be integrated with the display screen 941 to achieve the input and output functions of the mobile phone.

The mobile phone may also include at least one sensor 950, such as a light sensor, a motion sensor, and other sensors. As one implementation, the light sensor may include an ambient light sensor and a proximity sensor, among which the ambient light sensor may adjust the brightness of the display screen 941 according to ambient lights, and the proximity sensor may turn off the display screen 941 and/or backlight when the mobile phone reaches nearby the ear. As a kind of motion sensor, the accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related applications (such as vertical and horizontal screen switch, related games, or magnetometer attitude calibration), or the accelerometer sensor can be used for vibration-recognition related functions (such as a pedometer, or percussion) and so on. The mobile phone can also be equipped with a gyroscope, a barometer, a hygrometer, a thermometer, infrared sensor, and other sensors, which will not be repeated herein.

The audio circuit 960, the speaker 961, the microphone 962 may provide an audio interface between the user and the mobile phone. The audio circuit 960 may convert the received audio data into electrical signals and transfer the electrical signals to the speaker 961; thereafter the speaker 961 converts the electrical signals into sound signals for output. On the other hand, the microphone 962 converts the received sound signals into electrical signals, which will be received and converted into audio data by the audio circuit 960 for output. The audio data is then processed and transmitted by the processor 980 via an RF circuit 910 to another mobile phone for example, or the audio data is output to the memory 920 for further processing.

Wi-Fi belongs to a short-range wireless transmission technology. With aid of a Wi-Fi module 970, the mobile phone may assist the user in E-mail receiving and sending, webpage browsing, access to streaming media, and the like. Wi-Fi provides users with wireless broadband Internet access. Although the Wi-Fi module 970 is illustrated in FIG. 7, the Wi-Fi module 970 is not essential to the mobile phone and can be omitted according to actual needs without departing from the essential nature of the present disclosure.

The processor 980 is the control center of the mobile phone and is configured to connect various parts of the whole mobile phone through various interfaces and lines, run or execute software programs and/or modules stored in the memory 920, and invoke data stored in the memory 920 to perform various functions of the mobile phone and process data, thereby monitoring the mobile phone as a whole. In at least one implementation, the processor 980 may include one or more processing units. For example, the processor 980 may integrate an application processor and a modem processor, where the application processor is configured to handle an operating system, a user interface, an application, and so on, and the modem processor is mainly configured to process wireless communication. It will be understood that the above-mentioned modem processor may not be integrated into the processor 980.

The mobile phone also includes the power supply 990 (e.g., a battery) that supplies power to various components. For instance, the power supply 990 may be logically connected to the processor 980 via a power management system to enable management of charging, discharging, and power consumption through the power management system.

Although not illustrated, the mobile phone may include a camera, a Bluetooth module, etc., and the disclosure will not elaborate herein.

The methods of the foregoing embodiments illustrated in FIG. 2, FIG. 3, and FIG. 4 can be realized based on the structure of the mobile phone.

The functions of the units illustrated in FIG. 5 can be achieved based on the structure of the mobile phone.

Embodiments of the present disclosure also provide a computer storage medium. The computer storage medium stores computer programs which, when executed, are configured to execute all or part of the operations of any of the methods for migrating data described in the above-described method embodiments.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

In the embodiments of the disclosure, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the embodiments.

In addition, the functional units in various embodiments of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a universal serial bus (USB) flash disk, a read-only memory (ROM), a RAM, a removable hard disk, a disk, a compact disc (CD), or the like.

It will be understood by those of ordinary skill in the art that all or a part of the various methods of the embodiments described above may be accomplished by means of a program to instruct associated hardware, the program may be stored in a computer-readable memory, which may include a flash memory, a ROM, a RAM, a disk, a CD, and the like.

The embodiments of the present disclosure are described in detail above, and the principles and implementations of the present disclosure are described herein by using specific embodiments.

## Claims

1. A method for migrating data, performed by a first terminal, comprising:
establishing (S101, S201, S301) a communication connection to a second terminal;
classifying data to be migrated into system data and privacy data, determining (S102, S202, S302) the privacy data and the system data in the data to be migrated;
transmitting (S204) the system data to the second terminal; and
transmitting (S103) the privacy data carrying first decryption information to the second terminal, wherein the first decryption information is for the second terminal to decrypt the privacy data when the second terminal detects that second decryption information input by a user matches the first decryption information.

2. The method of claim 1, wherein transmitting the privacy data carrying the first decryption information to the second terminal comprises:
acquiring (S203) the first decryption information pre-stored; and
transmitting (S204) the privacy data carrying the first decryption information pre-stored to the second terminal based on the communication connection established with the second terminal.

3. The method of claim 1 or 2, wherein transmitting the privacy data carrying the first decryption information to the second terminal comprises:
displaying (S303) a decryption information setting interface on a display interface of the first terminal;
acquiring (S304) the first decryption information input by the user; and
transmitting (S305) the privacy data carrying the first decryption information input by the user to the second terminal based on the communication connection established with the second terminal.

4. The method of any of claims 1 to 3, wherein establishing the communication connection to the second terminal comprises:
displaying a two-dimensional code on a display interface of the first terminal, the two-dimensional code being configured to be scanned by the second terminal to acquire a hotspot identity of a wireless hotspot created by the first terminal and password information corresponding to the hotspot identity to establish a communication connection with the first terminal based on the hotspot identity and the password information; wherein the two-dimensional code contains the hotspot identity of the wireless hotspot created by the first terminal and the password information corresponding to the hotspot identity.

5. The method of any of claims 1 to 4, wherein establishing the communication connection to the second terminal comprises:
establishing the communication connection to the second terminal based on a short-range wireless communication technology.

6. The method of claim 5, wherein the short-range wireless communication technology comprises at least one of a near field communication (NFC) technology, a ZigBee technology, and a Bluetooth communication technology.

7. An apparatus for migrating data, comprising:
a communicating unit (401), configured to establish a communication connection to a second terminal;
a determining unit (402), configured to classify data to be migrated into system data and privacy data, and determine the privacy data and the system data in the data to be migrated; and
a transmitting unit (403), configured to transmit the system data to the second terminal, and the transmitting unit (403) is further configured to transmit the privacy data carrying first decryption information to the second terminal, wherein the first decryption information is for the second terminal to decrypt the privacy data when the second terminal detects that second decryption information input by a user matches the first decryption information.

8. The apparatus of claim 7, wherein the transmitting unit configured to transmit the privacy data carrying the first decryption information to the second terminal is configured to:
acquire the first decryption information pre-stored; and
transmit, with a first terminal, the privacy data carrying the first decryption information pre-stored to the second terminal based on the communication connection established with the second terminal.

9. The apparatus of claim 7 or 8, wherein the transmitting unit configured to transmit the privacy data carrying the first decryption information to the second terminal is configured to:
display a decryption information setting interface on a display interface;
acquire the first decryption information input by the user; and
transmit the privacy data carrying the first decryption information input by the user to the second terminal based on the communication connection established with the second terminal

10. The apparatus of any of claims 7 to 9, wherein the communicating unit is configured to:
display a two-dimensional code on a display interface, the two-dimensional code being configured to be scanned by the second terminal to acquire a hotspot identity of a wireless hotspot created by a first terminal and password information corresponding to the hotspot identity to establish a communication connection with the first terminal based on the hotspot identity and the password information; wherein the two-dimensional code contains the hotspot identity of the wireless hotspot created by the first terminal and the password information corresponding to the hotspot identity.

11. The apparatus of any of claims 7 to 10, wherein the communicating unit is configured to establish the communication connection to the second terminal based on a short-range wireless communication technology.

12. The apparatus of claim 11, wherein the short-range wireless communication technology comprises at least one of an NFC technology, a ZigBee technology, and a Bluetooth communication technology.

13. A computer-readable medium comprising instructions which, when executed by a first terminal, cause the first terminal to carry out the method steps of claims 1 to 6.

## Patentansprüche

1. Verfahren zum Migrieren von Daten, das von einem ersten Endgerät durchgeführt wird und Folgendes umfasst:
Aufbauen (S101, S201, S301) einer Kommunikationsverbindung zu einem zweiten Endgerät;
Klassifizieren von Daten, die zu migrieren sind, in Systemdaten und persönliche Daten, Bestimmen (S102, 5202, S302) der persönlichen Daten und der Systemdaten in den Daten, die zu migrieren sind;
Übertragen (S204) der Systemdaten zum zweiten Endgerät und
Übertragen (S103) der persönlichen Daten, die erste Entschlüsselungsinformationen enthalten, zum zweiten Endgerät, wobei die ersten Entschlüsselungsinformationen dem zweiten Endgerät zum Entschlüsseln der persönlichen Daten dienen, wenn das zweite Endgerät detektiert, dass zweite Entschlüsselungsinformationen, die von einem Benutzer eingegeben werden, mit den ersten Entschlüsselungsinformationen übereinstimmen.

2. Verfahren nach Anspruch 1, wobei das Übertragen der persönlichen Daten, die die ersten Entschlüsselungsinformationen enthalten, zum zweiten Endgerät Folgendes umfasst:
Erfassen (S203) der vorab gespeicherten ersten Entschlüsselungsinformationen und
Übertragen (S204) der persönlichen Daten, die die vorab gespeicherten ersten Entschlüsselungsinformationen enthalten, auf Basis der Kommunikationsverbindung, die zum zweiten Endgerät aufgebaut ist, zum zweiten Endgerät.

3. Verfahren nach Anspruch 1 oder 2, wobei das Übertragen der persönlichen Daten, die die ersten Entschlüsselungsinformationen enthalten, zum zweiten Endgerät Folgendes umfasst:
Anzeigen (S303) einer Entschlüsselungsinformationseinstellungsschnittstelle auf einer Anzeigeschnittstelle des ersten Endgeräts;
Erfassen (S304) der vom Benutzer eingegebenen ersten Entschlüsselungsinformationen und
Übertragen (S305) der persönlichen Daten, die die vom Benutzer eingegebenen ersten Entschlüsselungsinformationen enthalten, auf Basis der Kommunikationsverbindung, die zum zweiten Endgerät aufgebaut ist, zum zweiten Endgerät.

4. Verfahren nach einem der Ansprüche 1 bis 3, wobei das Aufbauen der Kommunikationsverbindung zum zweiten Endgerät Folgendes umfasst:
Anzeigen eines zweidimensionalen Codes auf einer Anzeigeschnittstelle des ersten Endgeräts, wobei der zweidimensionale Code dazu ausgelegt ist, vom zweiten Endgerät gescannt zu werden, um eine Hotspotidentität eines drahtlosen Hotspots, der vom ersten Endgerät erstellt wurde, und Passwortinformationen, die der Hotspotidentität entsprechen, zu erfassen, um auf Basis der Hotspotidentität und der Passwortinformationen eine Kommunikationsverbindung zum ersten Endgerät aufzubauen;
wobei der zweidimensionale Code die Hotspotidentität des drahtlosen Hotspots, der vom ersten Endgerät erstellt wird, und die Passwortinformationen, die der Hotspotidentität entsprechen, enthält.

5. Verfahren nach einem der Ansprüche 1 bis 4, wobei das Aufbauen der Kommunikationsverbindung zum zweiten Endgerät Folgendes umfasst:
Aufbauen der Kommunikationsverbindung zum zweiten Endgerät auf Basis einer drahtlosen Kurzbereichskommunikationstechnologie.

6. Verfahren nach Anspruch 5, wobei die drahtlose Kurzbereichskommunikationstechnologie mindestens eines von einer Nahfeldkommunikations(NFC)-Technologie, einer ZigBee-Technologie und einer Bluetooth-Kommunikationstechnologie umfasst.

7. Vorrichtung zum Migrieren von Daten, die Folgendes umfasst:
eine Kommunikationseinheit (401), die dazu ausgelegt ist, eine Kommunikationsverbindung zu einem zweiten Endgerät aufzubauen;
eine Bestimmungseinheit (402), die dazu ausgelegt ist, Daten, die zu migrieren sind, in Systemdaten und persönliche Daten zu klassifizieren und die persönlichen Daten und die Systemdaten in den Daten, die zu migrieren sind, zu bestimmen; und
eine Übertragungseinheit (403), die dazu ausgelegt ist, die Systemdaten zum zweiten Endgerät zu übertragen, und die Übertragungseinheit (403) ferner dazu ausgelegt ist, die persönlichen Daten, die erste Entschlüsselungsinformationen enthalten, zum zweiten Endgerät zu übertragen, wobei die ersten Entschlüsselungsinformationen dem zweiten Endgerät zum Entschlüsseln der persönlichen Daten dienen, wenn das zweite Endgerät detektiert, dass zweite Entschlüsselungsinformationen, die von einem Benutzer eingegeben werden, mit den ersten Entschlüsselungsinformationen übereinstimmen.

8. Vorrichtung nach Anspruch 7, wobei die Übertragungseinheit, die dazu ausgelegt ist, die persönlichen Daten, die die ersten Entschlüsselungsinformationen enthalten, zum zweiten Endgerät zu übertragen, zu Folgendem ausgelegt ist:
Erfassen der vorab gespeicherten ersten Entschlüsselungsinformationen und
Übertragen der persönlichen Daten, die die vorab gespeicherten ersten Entschlüsselungsinformationen enthalten, mit einem ersten Endgerät auf Basis der Kommunikationsverbindung, die zum zweiten Endgerät aufgebaut ist, zum zweiten Endgerät.

9. Vorrichtung nach Anspruch 7 oder 8, wobei die Übertragungseinheit, die dazu ausgelegt ist, die persönlichen Daten, die die ersten Entschlüsselungsinformationen enthalten, zum zweiten Endgerät zu übertragen, zu Folgendem ausgelegt ist:
Anzeigen einer Entschlüsselungsinformationseinstellungsschnittstelle auf einer Anzeigeschnittstelle;
Erfassen der vom Benutzer eingegebenen ersten Entschlüsselungsinformationen und
Übertragen der persönlichen Daten, die die vom Benutzer eingegebenen ersten Entschlüsselungsinformationen enthalten, auf Basis der Kommunikationsverbindung, die zum zweiten Endgerät aufgebaut ist, zum zweiten Endgerät.

10. Vorrichtung nach einem der Ansprüche 7 bis 9, wobei die Kommunikationseinheit zu Folgendem ausgelegt ist:
Anzeigen eines zweidimensionalen Codes auf einer Anzeigeschnittstelle, wobei der zweidimensionale Code dazu ausgelegt ist, vom zweiten Endgerät gescannt zu werden, um eine Hotspotidentität eines drahtlosen Hotspots, der von einem ersten Endgerät erstellt wurde, und Passwortinformationen, die der Hotspotidentität entsprechen, zu erfassen, um auf Basis der Hotspotidentität und der Passwortinformationen eine Kommunikationsverbindung zum ersten Endgerät aufzubauen;
wobei der zweidimensionale Code die Hotspotidentität des drahtlosen Hotspots, der vom ersten Endgerät erstellt wird, und die Passwortinformationen, die der Hotspotidentität entsprechen, enthält.

11. Vorrichtung nach einem der Ansprüche 7 bis 10, wobei die Kommunikationseinheit dazu ausgelegt ist, die Kommunikationsverbindung zum zweiten Endgerät auf Basis einer drahtlosen Kurzbereichskommunikationstechnologie aufzubauen.

12. Vorrichtung nach Anspruch 11, wobei die drahtlose Kurzbereichskommunikationstechnologie mindestens eines von einer NFC-Technologie, einer ZigBee-Technologie und einer Bluetooth-Kommunikationstechnologie umfasst.

13. Computerlesbares Medium, das Anweisungen umfasst, die, wenn sie von einem ersten Endgerät ausgeführt werden, das erste Endgerät veranlassen, die Verfahrensschritte der Ansprüche 1 bis 6 umzusetzen.

## Revendications

1. Procédé de migration de données, exécuté par un premier terminal, comprenant :
établir (S101, S201, S301) une connexion de communication avec un second terminal;
classer des données à migrer en données système et en données de confidentialité, déterminer (S102, S202, S302) les données de confidentialité et les données système dans les données à migrer;
transmettre (S204) les données système au second terminal; et
transmettre (S103) les données de confidentialité contenant de premières informations de décryptage au second terminal, dans lequel les premières informations de décryptage sont destinées au second terminal pour décrypter les données de confidentialité lorsque le second terminal détecte que de secondes informations de décryptage entrées par un utilisateur correspondent aux premières informations de décryptage.

2. Procédé de la revendication 1, dans lequel la transmission des données de confidentialité contenant les premières informations de décryptage au second terminal comprend :
acquérir (S203) les premières informations de décryptage pré-stockées; et
transmettre (S204) les données de confidentialité contenant les premières informations de décryptage pré-stockées au second terminal sur la base de la connexion de communication établie avec le second terminal.

3. Procédé de la revendication 1 ou 2, dans lequel la transmission des données de confidentialité contenant les premières informations de décryptage au second terminal comprend :
afficher (S303) une interface de paramétrage d'informations de décryptage sur une interface d'affichage du premier terminal;
acquérir (S304) les premières informations de décryptage entrées par l'utilisateur; et
transmettre (S305) les données de confidentialité contenant les premières informations de décryptage entrées par l'utilisateur au second terminal sur la base de la connexion de communication établie avec le second terminal.

4. Procédé de l'une quelconque des revendications 1 à 3, dans lequel l'établissement de la connexion de communication avec le second terminal comprend :
afficher un code bidimensionnel sur une interface d'affichage du premier terminal, le code bidimensionnel étant configuré pour être scanné par le second terminal afin d'acquérir une identité de point d'accès d'un point d'accès sans fil créé par le premier terminal et des informations de mot de passe correspondant à l'identité de point d'accès pour établir une connexion de communication avec le premier terminal sur la base de l'identité de point d'accès et des informations de mot de passe; dans lequel le code bidimensionnel contient l'identité de point d'accès du point d'accès sans fil créé par le premier terminal et les informations de mot de passe correspondant à l'identité de point d'accès.

5. Procédé de l'une quelconque des revendications 1 à 4, dans lequel l'établissement de la connexion de communication avec le second terminal comprend :
établir la connexion de communication avec le second terminal sur la base d'une technologie de communication sans fil à courte portée.

6. Procédé de la revendication 5, dans lequel la technologie de communication sans fil à courte portée comprend au moins une technologie parmi une technologie de communication en champ proche (NFC), une technologie ZigBee et une technologie de communication Bluetooth.

7. Appareil pour migrer des données, comprenant :
une unité de communication (401), configurée pour établir une connexion de communication avec un second terminal;
une unité de détermination (402), configurée pour classer des données à migrer en données système et en données de confidentialité, et déterminer les données de confidentialité et les données système dans les données à migrer; et
une unité de transmission (403), configurée pour transmettre les données système au second terminal, et l'unité de transmission (403) est en outre configurée pour transmettre les données de confidentialité contenant de premières informations de décryptage au second terminal, dans lequel les premières informations de décryptage sont destinées au second terminal pour décrypter les données de confidentialité lorsque le second terminal détecte que de secondes informations de décryptage entrées par un utilisateur correspondent aux premières informations de décryptage.

8. Appareil de la revendication 7, dans lequel l'unité de transmission configurée pour transmettre les données de confidentialité contenant les premières informations de décryptage au second terminal est configurée pour :
acquérir les premières informations de décryptage pré-stockées; et
transmettre, avec un premier terminal, les données de confidentialité contenant les premières informations de décryptage pré-stockées au second terminal sur la base de la connexion de communication établie avec le second terminal.

9. Appareil de la revendication 7 ou 8, dans lequel l'unité de transmission configurée pour transmettre les données de confidentialité contenant les premières informations de décryptage au second terminal est configurée pour :
afficher une interface de paramétrage d'informations de décryptage sur une interface d'affichage;
acquérir les premières informations de décryptage entrées par l'utilisateur; et
transmettre les données de confidentialité contenant les premières informations de décryptage entrées par l'utilisateur au second terminal sur la base de la connexion de communication établie avec le second terminal.

10. Appareil de l'une quelconque des revendications 7 à 9, dans lequel l'unité de communication est configurée pour :
afficher un code bidimensionnel sur une interface d'affichage, le code bidimensionnel étant configuré pour être scanné par le second terminal afin d'acquérir une identité de point d'accès d'un point d'accès sans fil créé par un premier terminal et des informations de mot de passe correspondant à l'identité de point d'accès pour établir une connexion de communication avec le premier terminal sur la base de l'identité de point d'accès et des informations de mot de passe; dans lequel le code bidimensionnel contient l'identité de point d'accès du point d'accès sans fil créé par le premier terminal et les informations de mot de passe correspondant à l'identité de point d'accès.

11. Appareil de l'une quelconque des revendications 7 à 10, dans lequel l'unité de communication est configurée pour établir la connexion de communication avec le second terminal sur la base d'une technologie de communication sans fil à courte portée.

12. Appareil de la revendication 11, dans lequel la technologie de communication sans fil à courte portée comprend au moins une technologie parmi une technologie NFC, une technologie ZigBee et une technologie de communication Bluetooth.

13. Support lisible par ordinateur comprenant des instructions qui, lorsqu'elles sont exécutées par un premier terminal, amènent le premier terminal à exécuter les étapes du procédé des revendications 1 à 6.
